# EUROPÄISCHE PATENTSCHRIFT

(11) **EP 2 117 746 B1**
(45) Veröffentlichungstag und Bekanntmachung des Hinweises auf die Patenterteilung: **28.04.2010**
(21) Anmeldenummer: 08700550.0
(22) Anmeldetag: 08.02.2008
(51) Int. Cl.: B21D 39/03

(54) **VERFAHREN UND WERKZEUG ZUM CLINCHEN VON DICKBLECHEN, SOWIE VERWENDUNG DES WERKZEUGS**
METHOD AND TOOL FOR CLINCHING THICK SHEET METAL, AND USE OF THE TOOL
PROCÉDÉ ET OUTIL POUR CLINCHER DES TÔLES ÉPAISSES, ET UTILISATION DE L'OUTIL

(30) Priorität: 13.02.2007 EP 07102274
(43) Veröffentlichungstag der Anmeldung: 18.11.2009
(73) Patentinhaber: Inventio AG, 6052 Hergiswil (CH)
(72) Erfinder: TROJER, Andreas, A-1230 Wien (AT); MATHEISL, Michael, A-2331 Vösendorf (AT); ILLEDITS, Thomas, A-2491 Neufeld (AT); NOVACEK, Thomas, A-2320 Schwechat (AT)
(86) Internationale Anmeldenummer: PCT/CH2008/000046
(87) Internationale Veröffentlichungsnummer: WO 2008/098389

(56) Entgegenhaltungen:
- WO-A-2006/047848
- JP-A- 10 071 436
- US-A1- 2004 168 297

## Beschreibung

Die Erfindung betrifft ein Clinchwerkzeug zum Herstellen einer tragfähigen Verbindung zweier Metallwerkstücke gemäss dem Oberbegriff des Anspruchs 1, ein Verfahren zum Clinchen von Metallwerkstücken zum Herstellen einer tragfähigen Verbindung gemäss dem Oberbegriff des Anspruchs 9, sowie die Verwendung des Clinchwerkzeuges gemäss dem Oberbegriff des Anspruchs 14.

Die Merkmale der Oberbegriffe sind in der WO 2006/047848 A1 offenbart.

Clinchen ist ein Umformfügeverfahren, das bereits seit längerem bekannt ist. Dieses Verfahren wird auch als Durchsetzfügen bezeichnet. Das Clinchen ist eine umtormtechnische Verbindungsteehnologie, die je nach Ausführungsform ohne Hilfsfügeteil auskommt.

Für das Clinchen gibt es bezüglich der Erzeugung des Fügeelementes verschiedene Varianten. Eine Charakterisierung des Clinchens ist folgendermaßen möglich:
- nach der Fügeelementausbildung: Clinchen mit und ohne Schneidanteil;
- nach der Matrizenform: starre und öffnende Matrize
- nach der Workzeugkinematik: ein- und mehrstufiges Clinchen.

Im Folgenden geht es primär um das Clinchen ohne Schneidanteil. Dieses Verfahren hat gewisse Vorteile gegenüber den konventionellen Verfahren, die zum Verbinden von Blechen oder anderen Werkstücken eingesetzt werden, wie zum Beispiel das Schweissen, das Punktschweissen, das Verbinden mittels Nieten bzw. Blindnieten und das Verwenden von Stanznieten. Gegenüber den konventionellen Verbindungsverfahren ist das Clinchen ohne Schneidanteil günstiger, wenn man die Kosten pro Verbindung betrachtet.

Das Clinchen von Blechen und anderen Metallwerkstücken, die dicker sind als 4mm,ist aus der WO 2006/047848 A1 bekannt. Wie im Rahmen der vorliegenden Erfindung festgestellt wurde, sind allerdings die Klemmkräfte bei diesem bekannten Verfahren sehr hoch, was beim Herausziehen des Stempels zur Beschädigung der Bleche bzw. Metallwerkstücke führen kann.

Aufgabe der Erfindung ist es ein Verfahren bereit zu stellen, um Bleche und Träger aus dicken Blechen, vorzugsweise mit Dicken, die grösser sind als 4mm, mit geringen Klemmkräften zu clinchen, wobei mit optimaler Hinterschnittauspragung und grösstmöglicher Halsdicke gearbeitet werden soll, um eine entsprechend hohe Festigkeit der Clinchverbindung zu gewährleisten. Ausserdem soll ein entsprechendes Werkzeug vorgeschlagen und dessen Verwendung optimiert werden.

Die Lösung der Aufgabe erfolgt
- für das Werkzeug durch die Merkmale des Anspruchs 1; und
- für das Verfahren durch die Merkmale des Anspruchs 9; und
- für die Verwendung durch die Merkmale des Anspruchs 14.

Vorteilhafte Ausführungsbeispiele und Weiterbildungen der Erfindung sind durch die jeweiligen abhängigen Patentansprüche umschrieben bzw. definiert.

Gemäss Erfindung ist es möglich, Stahlbleche und -träger bzw. Stahlprofile (hier allgemein als MetallwerkstUcke bezeichnet) mit geringen Klemmkräften zu clinchen, wobei mindestens eines dieser Elemente eine Dicke hat, die oberhalb von 4mm liegt.

Um dies zu ermöglichen, wurden die Clinchwerkzeuge entsprechend weiterentwickelt und optimiert. Die erfindungsgemässen Werkzeuge bzw. Apparate zeichnen sich dadurch aus, dass sie einen konisch geformten Stempel mit zwei Übergangsbereichen haben, wobei der Übergangsbereich im Bereich der Stirnendflächen einen größeren Winkel aufweist als der daran anschließende obere Übergangsbereich. Der größere Flankenwinkel kann kleiner oder gleich 10 Grad betragen und in einen Flankenwinkel von 5 Grad bis Null Grad übergehen. Der Durchmesser dieses Stempels liegt vorzugsweise im Bereich zwischen 10mm und 35mm. Besonderes bevorzugt sind Durchmesser zwischen 12mm (14mm, 16mm, 18mm) bis 20mm bzw. 25mm, wobei dieser Durchmesser von der Dicke der zu verbindenden Metallwerkstücke abhängt und von der erforderlichen Festigkeit bzw. Zugkraft.

Durch die vorliegende Erfindung wird das Clinchen eine echte Alternative für das Schweissen, das bisher meistens als Fugeverfahren zum Verbinden dicker Bleche bzw. Werkstücke (zum Beispiel ein St-37, St-44, St-52, St-70 Blech bzw. EN-S235, S275, S355, S460 Blech) oder Träger (Dicke > 4 mm) verwendet wird. Das Clinchen kann aber auch Niet- und Schraubverbindungen ersetzen.

Gemäss Erfindung können Bleche, Profile und andere Metalleinzelteile bzw. Metallwerkstücke unterschiedlicher Dicke und verschiedener Werkstoffe miteinander verbunden werden. Die Verbindung zweier Metallworkstücke entsteht beim Clinchen ausschließlich und unmittelbar aus dem/den Werkstoff/en der zu verbindenden Metallwerkstücke. Die durch Clinchen verbundenen Elemente werden hier als geclinchtes Werkstück bezeichnet.

Die vorliegende Erfindung ermöglicht es in zunehmendem Masse Metallwerkstückverbindungen, zum Beispiel Stahlverbindungen bzw. Blechprofilverbindungen bzw. Blechteileverbindungen oder Blechstreifenverbindungen bzw. ganz allgemein Blechverbindungen, nun auch im Aufzugs- und Fahrtreppenbau einzusetzen, wobei unter anderem ein Teil der Aufzugskabine bzw. des Aufzuges und/oder des Aufzugmaschinenraumes oder des Fachwerkes bzw. Tragwerkes einer Fahrtreppe mittels Clinchtechnik hergestellt werden kann.

Es können aber auch verschiedene tragende Anbauteile mittels Clinchtechnik befestigt werden sowie tragende oder stützende Gerüste, Gestelle, Konsolen, Skulpturen, Chassis, Paneele oder Rahmen.

Mit der vorliegenden Erfindung wird eine unlösbare Verbindung zweier Metallwerkstücke geschaffen, die zudem große Haltekräfte (Zugkräfte und Scherkräfte) erreicht. Unter dynamischer Beanspruchung zeigt sich, dass die so hergestellten geclinchten Werkstücke ein deutlich besseres Trageverhalten aufweisen als punktgeschweisste Verbindungen.

Es lassen sich gemäss Erfindung problemlos beschichtete, aber auch unbeschichtete Materialien miteinander verbinden, was besonders im Aufzugs- und Fahrtreppenbau neue Möglichkeiten der Materialwahl eröffnet. So können zum Beispiel verzinkte, lackierte, oder kunststoffbeschichtete Bleche und/oder. Stahlträger miteinander verbunden werden, ohne dass die Beschichtung durch das Clinchen merkbaren Schaden nehmen würde.

Es ist ein weiterer Vorteil des Clinchens, dass man zum Herstellen der Verbindung weder Vorlochungen noch Hilfsfügeteile bzw. Verbindungsteile bzw. Verbinciungsmaterial benötigt. Der Hauptvorteil des Clinchens gegenüber herkömmlichen Verfahren sind aber die geringen Fügekosten. Ausserdem findet kein Wärmeeintrag bzw. Wärmeeinbringung in die zu verbindenden Werkstücke statt, so dass Verzug und Einbrand und Gefügevoränderungen vermieden werden.

Weitere Einzelheiten und Vorteile der Erfindung werden im Folgenden an Hand eines Ausführungsbeispiels und mit Bezug auf die Zeichnung beschrieben. Es zeigen:
- Fig. 1: den Stempel eines Clinchwerkzeugs und zwei Metallwerkstücke, die durch Clinchen miteinander verbunden wurden, in einer stark vereinfachten, schematisierten Darstellung;
- Fig. 2A: einen ersten Schritt des erfindungsgemässen Clinchens, in einer schematisierten Darstellung, wobei die beiden Übergangsbereiche des Stempels nicht dargestellt sind;
- Fig. 2B: einen zweiten Schritt des erfindungsgemässen Clinchens, in einer schematisierten Darstellung, wobei die beiden Übergangsbereiche des Stempels nicht dargestellt sind;
- Fig. 2C: einen dritten Schritt des erfindungsgemässen Clinchens, in einer schematisierten Darstellung, wobei die beiden Übergangsbereiche des Stempels nicht dargestellt sind;
- Fig. 3A: einen Schnitt durch zwei geclinchte Metallwerkstücke;
- Fig. 3B: einen Teilschnitt bzw. Detail eines Bereichs des erfindungsgemässen Clinchwerkzeuges;
- Fig. 4A: einen Schnitt, der zwei geclinchte Metallwerkstücke bzw. Metalleinzelteil und einen Teil des Clinchwerkzeuges (nicht erfindungsgemäß) zeigt, wobei der Stempel des Clinchwerkzeuges einen Durchmesser von 12mm hat;
- Fig. 4B: einen Schnitt, der zwei geclinchte Metallwerkstücke und einen Teil des Clinchwerkzeuges (nicht erfindungsgemäß) zeigt, wobei der Stempel des Clinchwerkzeuges einen Durchmesser von 14mm hat;
- Fig. 4C: einen Schnitt, der zwei geclinchte Metallwerkstücke und einen Teil des Clinchwerkzeuges (nicht erfindungsgemäß) zeigt, wobei der Stempel des Clinchwerkzeuges einen Durchmesser von 20mm hat;
- Fig. 5: einen Schnitt durch ein Stahlprofil, an das ein Blechprofil bzw. Stahlprofil bzw. Stahlwinkel mit zwei Clinchverbindungen festgeclincht wurde;
- Fig. 6A: einen Schnitt durch einen schematisch dargestellten Stempel gemäss Erfindung;

Es geht im Rahmen der vorliegenden Patentanmeldung, wie eingangs bereits angedeutet, um das Clinchen ohne Schneidanteil. Diese Art des Clinchens ist ein reiner Umformfügeprozess. Das Verbinden der Werkstücke wird lediglich mittels Durchsetzen in Verbindung mit Einsenken und nachfolgendem Stauchen realisiert.

Der Grundgedanke bei der Entwicklung dieses Verfahrens ohne Schneidanteil ist vor allem das Streben nach erhöhter Verbindungssteifigkeit infolge des größeren Materialzusammenhaltes.

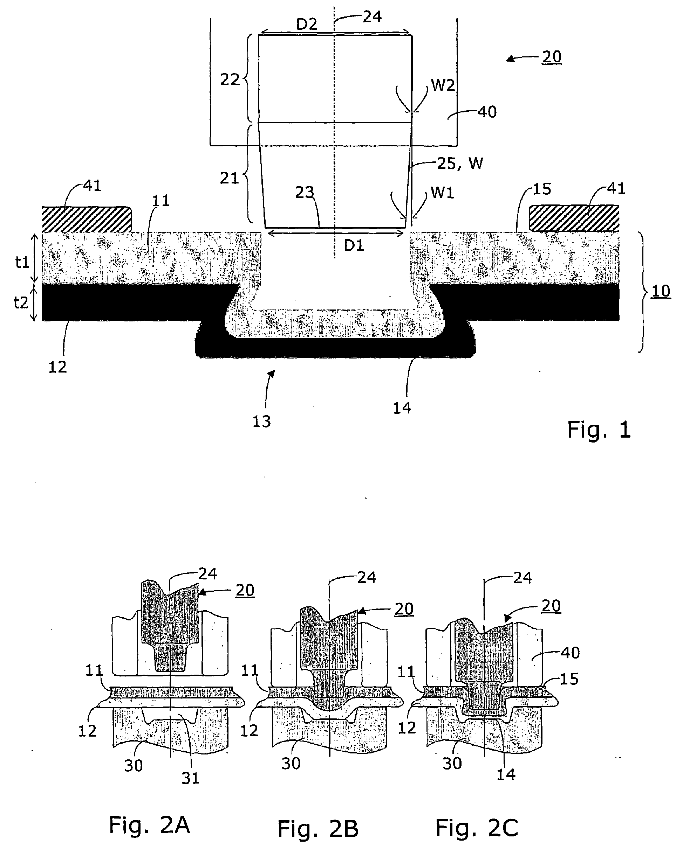

Das Prinzip der Erfindung ist in Fig. 1 rein schematisch dargestellt. Gezeigt sind zwei Metallwerkstücke 11 und 12, die durch eine Clinchverbindung 13 miteinander verbunden wurden. Ein Teil des Stempelwerkzeugs 20, der hier als Stempel bezeichnet wird, ist oberhalb der Clinchverbindung 10 oder des Clinchpunktes 10 gezeigt.

Das Clinchwerkzeug 20 umfasst einen Stempel und ein Gegenwerkzeug 30, das als Matrize oder als Amboss ausgebildet sein kann. Der Stempel ist in Bezug auf seine Rotationsachse 24 rotationssymmetrisch ausgelegt. Der Stempel weist eine konzentrisch zur Rotationsachse 24 angeordnete Flanke 25 mit Flankenwinkel W auf. Bezüglich einer endständigen Stirnendfläche 23 des Stempels, wird bei der Flanke 25 zwischen einem an die Stirnendfläche 23 angrenzenden unteren Übergangsbereich 21 der Flanke 25 mit Flankenwinkel W1 sowie einem oberen Übergangsbereich 22 der Flanke 25 mit Flankenwinkel W2 unterschieden. Die beiden Übergangsbereiche 21, 22 gehen ineinander über. Dabei können sie wie in den Ausführungsbeispielen gemäss Fig. 1, 3B und 6A gezeigt, auf unstetige Art und Weise ineinander übergehen und unterschiedliche Flankenwinkel W1, W2 aufweisen. Die zu verbindenden Metallwerkstücke 11, 12 (z.B. zwei Bleche unterschiedlicher oder gleicher Dicke t1 und t2) worden durch den Stempel ähnlich wie beim Prägen oder Stauchen unter plastischer Deformation in eine Kuhle bzw. Ausnehmung bzw. Hohlraum bzw. Verformungsraum 31 der Matrize 30 gedrückt, wie in Fig. 2A - 2C gezeigt. Durch eine spezielle Gestaltung der Kuhle bzw. Ausnehmung bzw. Hohlraum bzw. Verformungsraum 31 entsteht eine Clinchverbindung 13, die eine druckknopfähnliche bzw. stauchpunktähnliche bzw. prägepunktähnliche Form aufweist. Die Clinehverbindung 13 verbindet die Metallwerkstücke 11, 12 form- und kraftschlüssig miteinander, wie in Fig. 1, Fig. 2C und Fig. 3A und Fig. 4 schematisch angedeutet.

Die Figuren 2A - 2C zeigen in drei Stufen die Herausbildung der Clinchverbindung 13 ohne Schneidanteil mit einem Gegenwerkzeug 30, das als starre Matrize ausgebildet ist, diese Matrize weist eine Ausnehmung bzw. Hohlraum bzw. verformungeraum bzw. Kuhle (31) im Bereich der Bearbeitungsfläche auf. Wobei der Stempel die, auf der Bearbeitungsfläche angeordneten Metallwerkstücke 11, 12 in einem Überschneidungsbereich bzw. Überlappungebereich oberhalb der Ausnehmung bzw. Hohlraum bzw. Verformungsraum bzw. Kuhle 31 derart verformt, dass sich durch radiales Fliessen der Werkstoffe, in die Ausnehmung bzw. Hohlraum bzw. Verformungaraum bzw. Kuhle 31, ein lokaler Hinterschnitt f herausbildet. In einem ersten Schritt gemäss Fig. 2A ist zu erkennen, dass das erste Metallwerkstück 11 und das zweite Metallwerkstück 12 aneinandergelegt (d.h. aufeinander positioniert) werden. Dann werden die beiden aufeinander gelegten Metallwerkstticke 11, 12 gemeinsam auf einer Bearbeitungsfläche des Gegenwerkzeugs 30, in Form einer Matrize, bereitgestellt. In Fig. 2B ist gezeigt wie der Stempel des Stempelwerkzeuges 20 zugestellt wird und bereits zum Teil in die Werkstücke 11 und 12 eingesenkt wurde. In einem Überschneidungsbereich bzw. Überlappungsbereich verformen sich die Werkstücke 11 und 12 unter dem hohen Druck des Stempels und das Material "fliesst" in die Ausnehmung bzw. Hohlraum bzw. Verformungsraum bzw. Kuhle 31 der Matrize 30. Das Einsenken bzw. Eindrücken des Stempels erfolgt bis die Unterseite 14 des zweiten Metallwerkstückes 12 weitestgehend gegen den Boden der Ausnehmung bzw. Hohlraum bzw. Verformungsraum bzw. Kuhle 31 der Matrize 30 anliegt. In einem weiteren Schritt wird der Stempel dann herausgezogen (dieser Schritt entspricht im Wesentlichen der in Fig. 1 gezeigten Situation).

Gemäss Erfindung kommt beim Trennen vorzugsweise ein Abstreifer bzw. Niederhalter 40 zum Einsatz, der das Trennen des Stempels nach der Umformung der Metallwerkstücke 11 und 12 erleichtert. Ein solcher Abstreifer bzw. Niederhalter 40 ist besonders dann vorteilhaft, wenn der Stempel aufgrund der beim Umformen auftretenden Kräfte und Materialverformungen in der Clinchverbindung 13 festklemmen sollte. Der Abstreifer 40 stützt sich (quasi) gegenüber der Oberfläche 15 des oberen stempelseitigen Metallwerkstückes 11 ab, während der Stempel zurückgenommen bzw. zurückgezogen wird. Bei Kenntnis der vorliegenden Erfindung kann der Fachmann natürlich an Stelle eines stempelseitigen Abstreifers auch einen matrizenseitigen Abstreifer realisieren.

Vorzugsweise werden die zu verbindenden Metallwerkstücke 11 und 12 durch einen Niederhalter, der in Fig. 1 durch die Nummer 41 bzw. 40 gekennzeichnet ist, gegen bzw. an die Matrize 30 gedrückt. Das Stempelwerkzeug 20 umfasst einen Druckzylinder (z.B. einen Hydraulikzylinder, Pressgaszylinder, pneumohydraulischen Zylinder, servaelektrischen Zylinder), der den sogenannten Stempelvorhub in Richtung der Metallwerkstücke 11 und nachfolgend 12 bewirkt. In einer ersten Phase des Stempelvorhubes wird der Stempel zugestellt (Fig. 2A), dann erfolgt die Einsenkphase bei welcher der Stempel in die Metallwerkstücke 11, 12 eingesenkt und diese gestaucht und verformt werden (Figuren 2B und 2C). Abschliessend erfolgt eine als Stempelrückhub bezeichnete Phase (siehe Fig. 1).

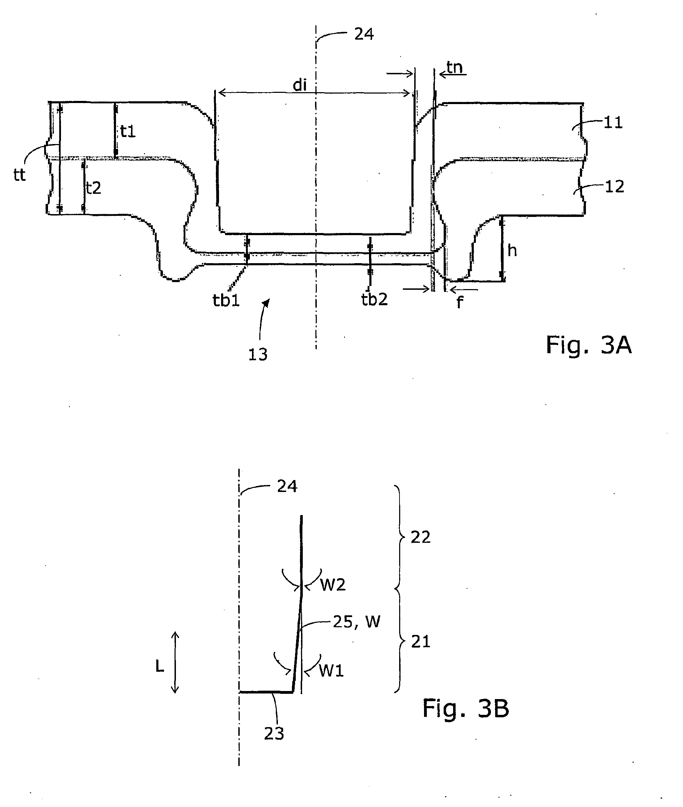

Infolge des Stauchdruckes während des Einsenkens kommt es zu einem Querfließen das Werkstoffes der Metallwerkstücke 11 und 12, wodurch die Matrize 30 mit der Ausnehmung bzw. Hohlraum bzw. Verformungsraum bzw. Kuhle 31, zum Beispiel in Form einer (eingearbeiteten) Ri.ngnut, weitestgehend bzw. ganz ausgefüllt und eines Hinterschnitts des stempelseitigen Metallwerkstücks 11 im matrizenseitigen Metallwerkstück 12 erzeugt wird (siehe Fig. 3A). Für die Beurteilung einer Clinchverbindung 13, wie in Fig. 3A gezeigt, sind Hinterschnitt f und Halsdicke tn am wichtigsten bzw. bedeutsamsten, da die Tragfähigkeit der clinchverbindung 13 in direkter Korrelation zu diesen Kenngrößen steht. Eine Clinchverbindung 13 und die Werkstücke 11, 12 können zusätzlich durch folgende Angaben charakterisiert werden: Innendurchmesser des Fügeelementes bzw. Stempels di, Überstandshöhe h, Restbodendicke tb2 des matrizenseitigen Metallwerkstücks 12, Restbodendicke tb1 des stempelseitigen Metallwerkstücks 11, matrizenseitige Metallwarkstückdicke t2, stempelseitige Matallwarkstückdicke t1, und Gesamtwerkstückdicke tt. Ein typischer Wert für den Hinterschnitt f beträgt 0.5mm und ein typischer Wert für die Halsdicke tn beträgt 1.5mm.

Es wurden verschiedene versuche und Experimente gemacht, um den an sich bekannten Clinchprozess zu optimieren und so abzuändern, dass auch Metallwerkstücke 11, 12 geclincht werden können, die dicker sind als 4mm, ohne dass zu hohe Klemmkräfte auftreten. Es wurden Simulationen gemacht und anschliessend verschiedene Werkzeuge gefertigt und Fügeversuche durchgeführt, um die (im Experiment) ermittelten Querschnitte, Füge- und Niederhaltekräfte mit der Referenz aus der Simulation vergleichen zu können. Als Grundlage der Untersuchungen zur Werkzeugauslegung dienten Merkzeuggeataltungagrundaätze für das Clinchen ohne Schneidanteil mit starrer Matrize 30.

Erste Untersuchungen haben ergeben, dass für die Herstellung einer Clinchverbindung 13 für einen kleinen Stempeldurchmesser (Durchmesser D2-12mm oder 14mm) Fügekräfte von ca. 400 kN bis 510 kN und für den größeren Stempeldurchmesser (D2=20mm) von ca. 670 kN (beides inkl. Niederhaltekraft) aufgewendet werden müssen. Diese Ergebnisse an sich liegen im Bereich des zu erwartenden Resultates. (Allerdings kam es trotz Werkzeugschmierung zu einem starken Klemmen des Stempels im Werkstück.)

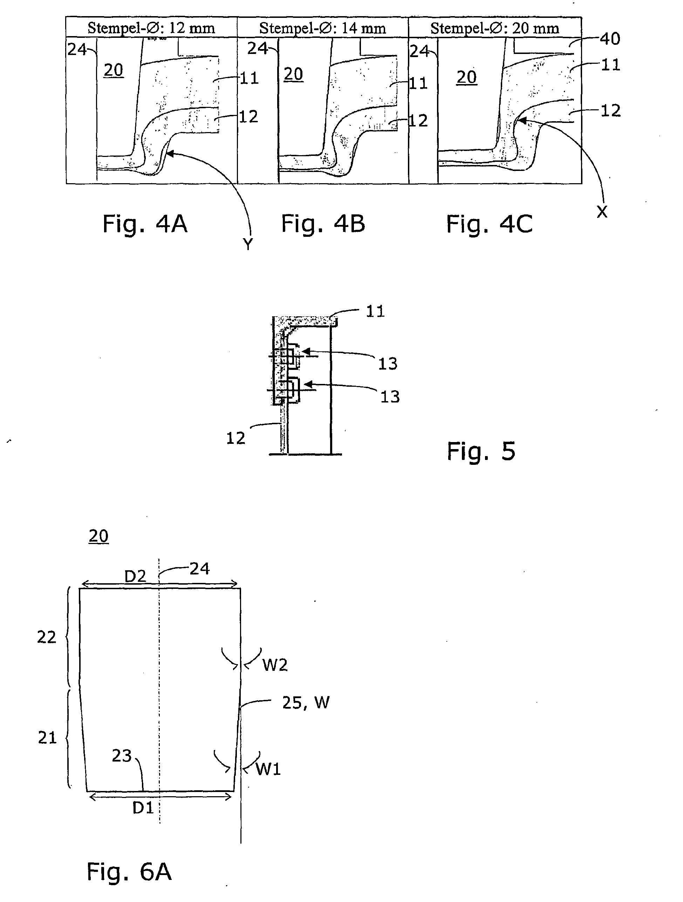

Genauere Untersuchungen zu dem Klemmen des Stempels haben gezeigt, dass das Klemmen durch eine Radialspannung verursacht wird, die auf die Flanke des Stempels einwirkt. Es hat sich gezeigt, dass es besonders im oberen Übergangsbereich 22 von der Flanke 25 zu hohen Radialspannungen kommt.
Nun wurde in einem weiteren optimierungsschritt die Geometrie des Stempels gezielt so verändert, dass eine geringere Radialspannung auf die Flanke 25 wirkt. Aufgrund der Tatsache, dass bei den ersten Werkzeugvarianten die Halsdicken tn und Hinterschnittwerte f der Stempel mit den Durchmessern D2=12 mm und D2=14 mm nahezu gleich waren, wurden weitere Optimierungen vorgenommen. Es wurden dabei auch Untersuchungen an Werkstücken mit verschiedener Gesamtwerkstückdicke tt und mit Werkstücken 11, 12 gemacht, die jeweils unterschiedliche Dicken t1, t2 haben. Dabei zeigte sich, dass handelsübliche bzw. konventionelle Stempel nicht nur die starke Tendenz zum Klemmen zeigen wenn man zu Gesamtwerkstückdicken tt > 8mm geht, sondern dass sich im Bereich zwischen den Werkstücken 11, 12 ein Hohlraum (siehe X in Fig. 4C) bildet. Dieser Hohlraum X beeinträchtigt und verringert die Festigkeit der entsprechenden Clinchverbindung 13.

Die verschiedenen Optimierungsschritte haben zu der Erkenntnis geführt, dass die Ausgestaltung der Flanken des Stempels einen unmittelbaren Einfluss auf das Klemmen und die Bildung des Hohlraums X hat. Um diese beiden negativen Effekte zu reduzieren oder ganz zu unterbinden, wurden Stempel entwickelt und getestet, die mindestens teilweise konisch geformt sind. Bei geeigneter Auswahl des entsprechenden Flankenwinkels W, W1, W2 konnte das Klemmen reduziert oder ganz verhindert werden, ohne dass es zu einer spürbaren Hohlraumbildung kam. Es hat sich gezeigt, dass diese beiden Effekte nur teilweise zusammenhängen und sich teilweise sogar gegenläufig verhalten. Durch die Auswahl eines geeigneten Winkelbereiches konnten beide Effekte minimiert werden.

Bei den in den Figuren 4A bis 4C gezeigten und im Folgenden beschriebenen Untersuchungen hat der nicht erfindungsgomässe Stempel jeweils einen konstanten Stempel-Flankenwinkel W = 5°, d.h. D1 < D2. Oder mit anderen Worten ausgedrückt, mindestens derjenige Teil des Stempels, der beim Einsenken mit den Werkstücken 11 und 12 in Kontakt kommt verjüngt sich nach unten (d.h. in Richtung des werkstückseitigen Endes des Stempels) hin.

Einige Aspekte der verschiedenen Untersuchungen sind in den Figuren 4A bis 4C dargestellt, weil sie für erfindungsgemäße Stempel analog gelten. Gezeigt wird das Fliessverhalten der Werkstücke 11, 12 beim Einsatz von Stempeln mit verschiedenen Durchmessern. In Fig. 4A ist gezeigt, wie sich die zwei Metallwerkstücke 11, 12 verformen, wenn der Stempel einen Durchmesser von 12mm aufweist. In Fig. 4B ist gezeigt, wie sich die zwei Metallwerkstücke 11, 12 verformen, wenn der Stempel einen Durchmesser von 14mm aufweist. Fig. 4C zeigt, wie sich die zwei Metallwerkstücke 11, 12 verformen, wenn der Stempel einen Durchmesser von 20mm aufweist. In allen drei Abbildungen ist eine Momentaufnahme gezeigt bevor der Stempelrückhub einsetzt.

Man kann anhand der Figuren 4A bis 4C erkennen, dass der Durchmesser D2 des Stempels einen Einfluss auf das Querfliessen der Werkstoffe bzw. Metallwerkstücke hat. Bei dem Stempel mit 12mm Durchmesser fliesst das Material des Metallwerkstücks 12 nicht ganz in den durch die Ausnehmung bzw. Verformungsraum bzw. Kuhle 31 gebildeten Hohlraum, wie im durch Y gekennzeichneten Bereich zu erkennen ist. Bei einem 14mm Stempel ergibt sich eine gute "Füllung" der Ausnehmung bzw. Hohlraum bzw. Verformungsraum bzw. Kuhle 31. Verwendet man einen Stempel mit 20mm Durchmesser, so zeigt sich ein Hohlraum (in Fig. 4C mit X bezeichnet) zwischen den Werkstücken 11 und 12.

Wie die diversen Untersuchungen und Forschungen gezeigt haben, ist der Stempeldurchmesser nur einer von verschiedenen Parametern, die einen direkten Einfluss auf den Clinchvorgang und die Festigkeit der Clinchverbindung 13 haben. Es hat sich gezeigt, dass beim Clinchen dicker Werkstücke mit tt > 8mm die Ausgestaltung der Flanke 25 eine besonders wichtige und bedeutende Rolle spielt.

Die vorliegende Erfindung zeichnet sich dementsprechend dadurch aus, dass der Stempel, der bei der Umformung in die Metallwerkstücke 11 und 12 eingesenkt wird, konisch geformt ist. Die konische Form des Stempels erstreckt sich mindestens über einen Teil (als Übergangsbereiche 21, 22 bezeichnet) derjenigen Länge L des Stempels, die in die Werkstücke 11, 12 eingesenkt bzw, eingedrückt wird. Die konische Form ergibt sich dadurch, dass die Flanke 25 des Stempels, siehe Fig. 3B, mindestens im unteren Übergangsbereich 21 zu der Stirnendfläche 23 konisch geformt ist und einen Flankenwinkel W1 aufweist, der kleiner oder gleich 10 Grad, vorzugsweise kleiner oder gleich 5 Grad ist. Wie in den Fig. 1 sowie 6A weiter gezeigt, ist der Flankenwinkel W2 des oberen Übergangsbereichs 22 vorzugsweise gleich Null Grad oder ebenfalls vorzugsweise kleiner oder gleich 5 Grad (Ausführungsbeispiele gemäss Fig. 4A bis 4c sowie 6B).

Besonders bewährt haben sich Stempel mit einem Durchmesser D2 zwischen 10mm und 20mm und mit einem Flankenwinkel W, W1, W2 der von einem ersten Winkel W1 übergeht in einen zweiten.Winkel W2, wobei der erste Winkel W1 kleiner oder gleich 10 Grad und vorzugsweise kleiner oder gleich 5 Grad beträgt und der zweite Winkel W2 kleiner oder gleich 2 Grad, und vorzugsweise 0 bis 1 Grad beträgt. Dabei befindet sich der erste Winkel W1 im unmittelbaren (unteren) Übergangsbereich 21 zur Stirnendfläche 23 (d.h. im Bereich des werkstuckseitigen Endes des Stempels) und der zweite Winkel W2 auf der vom Metallwerkstück 11, 12 wegführenden bzw. hinaushaltenden bzw. hinausragenden (oberen) Übergangsbereich 22 (d.h. im werkzeugseitigen Bereich des Stempels).

Diese Ausführung von konischen Stempeln zeigen eine deutlich geringere Tendenz zum Klemmen und es bilden sich keine (oder schwach ausgeprägte) Hohlräume X. Der Vorteil der geringeren Radialspannung und damit der geringeren Tendenz zum Klemmen wird jedoch durch die Entstehung des Hohlraumes X zwischen den Metallwerkstücken 11, 12 "erkauft", Das heisst, der Flankenwinkel W, W1, W2 kann nicht beliebig gewählt werden, da sonst der Hohlraum X zu gross und die Festigkeit der Clinchverbindung zu klein werden würde.

Ideal sind Ausführungsformen des Stempels, bei denen die durch den Flankenwinkel erzeugte Flankenrücknahme bzw. Flankenreduzierung nicht zu gross ist, da bei zu grosser Flankenrücknahme bzw. Flankenreduzierung der radial gerichtete Druck auf die Werkstücke 11, 12 zu gering wird und sich damit das Querfliessen der Werkstoffe bzw. der Metallwerkstücke reduziert.

Die angegebenen Winkelwerte für W, W1, W2 haben sich auch bewährt, weil die mit diesen Stempeln erzeugten Clinchverbindungen ähnliche, vergleichbare Werte für die Halsdicke in und den Hinterschnitt f aufweisen, wie die handelsüblichen, gebräuchlichen rein zylindrischen Dünnblech-Stempel. Dies spricht für eine vergleichbare, identische Zugfestigkeit der entsprechenden Clinchverbindung 13.

Die konische Form des Stempels erstreckt sich mindestens über die Übergansbereiche 21, 22 mit derjenigen Länge L des Stempels, die in die Werkstücke 11, 12 eingesenkt werden. Diese Länge L bei Metallwerkstücken deren Gesamtwerkstückdicke tt > 8mm kann wie folgt ermittelt werden: 0,3 tt ≤ L ≤ 2 tt. D.h., die konisch geformten Übergangsbereiche 21, 22 entsprechen zwischen drei Zehntel der Gesamtwerkstückdicke tt und der zweifachen Gesamtwerkstückdicke tt.

Die verschiedenen erfindungsgemässen Stempelformen werden im Folgenden anhand der Figuren 1 und 6A zusammenfassend erläutern.

| Ausführungsform | 1 | 2 |
|---|---|---|
| Fig. | 1 | 6A |
| Typische Durchmesser | D1 < D2 und 10mm ≤ D2 ≤ 30mm | D1 < D2 und 10mm ≤ D2 ≤ 30mm |
| Länge L der Übergangsbereiche 21, 22 | 0,3 tt ≤ L ≤ 2 tt | 0,3 tt ≤ L ≤ 2 tt |
| Winkel | W1 ≤ 10 Grad im unteren Übergangsbereich 21 und W2 = 0 im oberen Übergangsbereich 22 | W1 ≤ 10 Grad im unteren Übergangsbereich 21 und 0 Grad ≤ W2 im oberen Übergangsbereich 22, wobei W1 > W2 |

Die erzielten Festigkeiten, die mit den erfindungsgemässen Stempeln, zum Beispiel mit einem Stempel mit 12mm Durchmesser und einer 5°-0°-Stempelflanke (Ausführungsform 2, Fig. 6A), erreicht werden, betragen im Mittel mehr als 50 kN bzw. 55 kN. Bei besonders sorgfältig ausgewählten Bedingungen liegt die Zugkraft sogar bei ca. 58 kN und streut nur geringfügig um wenige Prozent.

Mit dem erfindungsgemassen Stempelwerkzeug 20 kann man auch zwei Clinchverbindungen 13 nebeneinander anbringen (siche Fig. 5), um die Zugfestigkeit und Scherfestigkeit weiter zu erhöhen. In diesem Fall hat sich erwiesen, dass die Zugfestigkeit auf werte erhöht werden konnte, die nahezu doppelt so gross sind wie bei einer einzelnen Clinchverbindung 13. Die Proben konnten im Mittel mit ca. 118 kN belastet werden.

Ein besonders vorteilhaftes Clinchwerkzeug 20 weist zwei gleichartige Stempel auf, die nebeneinander angeordnet sind und das erste Metallwerkstück 11 mit dem zweiten Metallwerkstück 12 durch zwei Clinchverbindungen zu verbinden in der Lage sind. Hier werden mit einer Zustellbewegung und einer Einsenkbewegung gleichzeitig zwei Clinchverbindungen nebeneinander erzeugt. Das Beispiel einer entsprechenden Doppelclinchverbindung ist in Fig. 5 gezeigt. Im gezeigten Beispiel ist zu erkennen, dass gemäss Erfindung zum Beispiel ein dicker Stahlprofilträger 11 (erstes Motallwerkstück) mit einem dünneren Blech bzw. Flachstahl bzw. Flacheisen bzw. Stahlprofil bzw. Blechprofil bzw. Blochprofilwinkel 12 (zweites Metallwerkstückl durch zwei nebeneinander liegenden Clinchverbindungen 13 verbunden werden kann.

Für die Abstreif(er)kraftgestaltung des Abstreifers 40 sind zwei Kriterien zu berücksichtigen. Zum einen muss die Abstreifkraft bzw. Abstreiferkraft größer als die Klemmkraft des Stempels sein. Dieser wort ist natürlich stark von der verwendeten Stempelgeometrie, wie beschrieben wurde, aber auch von der Schmierung bzw. Beschichtung der Werkzeuge abhängig. Maximale Auswerferkräfte von 30 kN bis 40 kN haben zu sehr zuverlässigen Ergebnissen geführt. Bei einer optimalen Gestaltung der Flankenwinkel w bzw. der Konizität des Stempels, reichen Auswerferkräfte von 25 kN. Für den 5°-0°-Stempel (Ausführungsform 2, Fig. 6A) kann sogar eine weitere Reduzierung der Auswerferkraft in Betracht gezogen werden, da es hier nie zum Klemmen des Stempels kommen wird.

In einer besonders vorteilhaften Ausführungsform fungiert der Abstreifer 40 gleichzeitig auch als Niederhalter (41) und ist so dimensioniert, dass die Metallwerkstücke 11, 12 eine möglichst geringe Verformung erfahren, um den Verzug der Werkstücke 11, 12 so gering wie möglich zu halten bzw. frei zu halten.

Es lassen sich mit den erfindungsgemässen Stempeln und den Clinchwerkzeugen, respektive Clinchmaschinen, die entsprechende Stempel aufweisen bzw. besitzen, besonders stabile und tragfähige Bauteile bzw. Baugruppen bzw. Bauelemente auf einfachste, müheloseste, kostengunstigste und zuverlässigste Art und Weise herstellen. Die Kosten für diese Bauteile bzw. Baugruppen bzw. Bauelemente mit Clinchverbindungen 13 liegen unter denen von geschweissten, genieteten oder verschraubten Verbindungen. Die Verbundmaterialkosten für Bauteile bzw. Baugruppen bzw. Bauelemente mit Clinchverbindungen 13 liegen bei Null. Weiters ist die Arbeitszeit auf ein Minimum beschränkt bzw. reduziert bzw. gedrosselt.

Gemäss Erfindung können Clinchverbindungen 13 ohne Schneidanteil auch mit öffnender Matrize erzeugt werden. Dabei werden federnd gelagerte Lamellen der Matrize nach dem Finsenkprozess durch das radiale Fließen des Werkstückmaterials unterhalb des Stempels nach außen gedrückt und somit die Ausbildung des Hinterschnittes ermöglicht.

Neben den Vorteilen des konventionellen Clinchens kann auch das matrizenlosealinchen eingesetzt werden, bei dem als Gegenwerkzeug 30 ein Amboss mit flacher Bearbeitungsfläche zum Einsatz kommt, wobei der Stempel die auf der Bearbeitungsfläche angeordneten Metalleinzelteile bzw. Metallteile bzw. Metallwerkstücke in einem Überschneidungsbereich bzw. Überlappungsbereich derart verformt, dass sich erst eine ambosseitige Erhebung und dann durch radiales Fliessen der Werkstoffe ein lokaler Hinterschnitt f herausbildet. Das Matrizenloseclinchen weist aufgrund seines speziellen Funktionsprinzips die folgenden vorteile auf:
- Ein Versatz zwischen (Füge) Stempel und Gegenwerkzeug (Amboss) beeinträchtigt die Qualität der Verbindung 13 nicht. Dadurch verringern sich die Genauigkeitsanforderungen an die Fügemaschine.
- Zeitaufwändige Einrichtarbeiten können entfallen.
- Der Verschleiß sinkt und die Prozesssicherheit steigt, da keine Ausbrüche an der Matrizenkante mehr auftreten können.
- Für alle Fugeaufgaben kann der gleiche Amboss verwendet werden. Ein Matrizenwechsel beim Wechsel der Fügeaufgabe, wie beim herkömmlichen Clinchen ist nicht mehr notwendig.
- Die Fügeverbindungen 13 sind flacher und weniger störend als die mit dem konventionellen Clinchen erzeugten Verbindungen.
- Ein Ändern der Blechdicke ist ohne Werkzeugwechsel möglich und spart wertvolle Arbeitszeit.
- Eine Änderung der Werkstoffpaarung geht ohne Aufwand vonstatten.
- Matrizenloses Clinchen erhöht die Anzahl der Clinchverbindungen bzw. Fügepunkte pro Werkzeugsatz bzw. pro (Füge) Stempel.

## Patentansprüche

1. Clinchwerkzeug (20) zum Herstellen einer tragfähigen Verbindung eines ersten Metallwarkstücke (11) mit einem zweiten Metallwerkstück (12), wobei das Clinchwerkzeug (20) ein Stempelwerkzeug und ein Gegenwerkzeug (30) umfasst, die zusammen durch Umformung der beiden Metallwerkatücke (11, 12) eine Clinchverbindung (13) formen, die das erste Motallwerkstück (11) mit dem zweiten Metallwerkstück (12) miteinander verbindet, und wobei das Stempelwerkzeug einen Stempel (21, 22) aufweist, der in Bezug auf eine Rotationsachse (24) des Stempels rotationssymmetrisch ausgeführt ist und eine konzentrisch zur Rotationsachse angeordnete Flanke (25) und eine Stirnendfläche (23) aufweist, die senkrecht zu der Rotationsachse (24) liegt, wobei die Flanke (25) des Stempels mindestens im unteren Übergangebereich (21) zu der Stirnendfläche (23) konisch geformt ist und einen Flankenwinkel (W, W1, W2) aufweist, der kleiner oder gleich 10 Grad ist, vorzugsweise kleiner oder gleich 5 Grad ist, **dadurch gekennzeichnet, dass** der Flankenwinkel (W, W1, W2) übergeht von einem ersten Winkel (W1) unmittelbar an dem Ende des unteren Übergangsbereichs (21), der in die Stirnendfläche (23) führt, zu einem zweiten Winkel (W2) eines oberen Übergangsbereichs (22), wobei der erste Winkel (W1) grösser ist als der zweite Winkel (W2) und dass bei der Umformung der Stempel auch im oberen Übergangsbereich (22) zumindest zum Teil in die Metallwerkstücke (11,12) eingesenkt wird.

2. Clinchwerkzeug (20) nach Anspruch 1, **dadurch gekennzeichnet, dass** die gesamte Länge (L) des Stempels, die bei der Umformung in die Metallwerkstücke (11, 12) eingesenkt wird, konisch geformt ist.

3. Clinchwerkzeug (20) nach Anspruch 1 und 2, **dadurch gekennzeichet, dass** der erste Winkel (W1) kleiner oder gleich 10 Grad und vorzugsweise kleiner oder gleich 5 Grad beträgt und der zweite Winkel (W2) kleiner oder gleich 2 Grad, und vorzugsweise 0 bis 1 Grad beträgt.

4. Clinchwerkzeug (20) nach einem der vorhergehenden Ansprüche, **dadurch gekennzeichnet, dass** der Stempel einen Durchmesser (D2) hat, der zwischen 10 und 30mm bzw. 35mm beträgt, wobei der Durchmesser (D2) vorzugsweise zwischen 12 und 20mm bzw. 25mm (einschliesslich) liegt.

5. Clinchwerkzeug (20) nach einem der vorhergehenden Ansprüche, **dadurch gekennzeichnet, dass das** Gegenwerkzeug (30) als Amboss ausgebildet ist, der eine flache bzw. ebene bzw. plane bzw. horizontale bzw. waagerechte Bearbeitungsfläche bzw. Oberfläche aufweist.

6. Clinchwerkzeug (20) nach einem der vorhergehenden Ansprüche 1 bis 5, **dadurch gekennzeichnet, dass** das Gegenwerkzeug (30) als Matrize ausgebildet ist, die eine Ausnehmung bzw. Hohlraum bzw. Verformungsraum bzw. Kuhle (31) aufweist.

7. Clinchwerkzeug (20) nach einem der vorhergehenden Ansprüche, **dadurch gekennzeichnet, dass** es einen Niederhalter (41, 40) zum Fixieren der Metallwerkstücke (11, 12) und einen Abstreifer (40) zum Trennen des Stempels nach der Umformung der Metallwerkstücke (11, 12) beinhaltet bzw. aufweist bzw. umfaast.

8. Clinchwerkzeug (20) nach einem der vorhergehenden Ansprüche, **dadurch gekennzeichnet, dass** es zwei gleichartige Stempel aufweist, die nebeneinander angeordnet sind und das erste Metallwerkstück (11) mit dem zweiten Metallwerkstück (12) durch zwei Clinchverbindungen (13) zu verbinden in der Lage sind bzw. ist.

9. Verfahren zum Anwenden einer umformtechnischen Verbindungstechnologie zum Herstellen einer tragfähigen Verbindung eines ersten Metallwerkstücks (11) und eines zweiten Metallwerkstitcks (12), wobei mittels eines Stempelwerkzeuges (20) und eines Gegenwerkzeuges (30) durch lokales Umformung eine Clinchverbindung (13) geformt wird, die das erste Metallwerkstück (11) mit dem zweiten Metallwerkstück (12) verbindet, mit den Schritten:
- Aufeinanderlegen und Bereistellen bzw. Ausrichten des ersten Metallwerkstücks (11) und des zweiten Metallwerkstücks (12) auf einer Bearbeitungsfläche des Gegenwerkzeuges (30),
- Zustellen eines Stempels des Stempelwerkzeuges (20),
- Einsenken des Stempels in die beiden aneinandergefügten Metallwerkstücke (11, 12) bis die Unterseite (14) des zweiten Metallwerkstücks (12) gegen einen Bereich das Gegenwerkzeuges (30) anliegt,
- Herausziehen des Stempels,
**dadurch gekennzeichnet, dass** der Stempel eine Flanke (25) aufweist, die mindestens in einem unteren Übergangsbereich (21) zu einer Stirnendfläche (23) konisch geformt ist und einen Flankenwinkel (W, W1, W2) aufweist, der kleiner oder gleich 10 Grad, vorzugsweise kleiner oder gleich 5 Grad ist, wobei der Flankenwinkel (W, W1, W2) übergeht von einem ersten Winkel (W1) unmittelbar an dem Ende des unteren Übergangsbereichs (21), der in die Stirnfläche (23) führt, zu einem zweiten Winkel (W2) eines oberen Übergangsbereichs (22), wobei der erste Winkel (W1) grösser ist als dor zweite Winkel (W2) und dass beim Einsenken des Stempels auch der obere Übergangsbereich (22) zumindest zum Teil in die Metallwerkstücke (11, 12) eindringt.

10. Verfahren nach Anspruch 9, **dadurch gekennzeichnet, dass** ein Abstreifer (40) beim Herausziehen des Stempels eingesetzt wird, um bei einem Klemmen des Stempels bzw, des Stempelwerkzeuges (20) an den Metallwerkstücken (11, 12) ein Trennen zu ermöglichen.

11. Verfahren nach Anspruch 9 und 10, **dadurch gekennzeichnet, dass** der Abstreifer (40) vor dem Trennen gegen eine Oberfläche (15) des ersten Metallwerkstücks (11) zugestellt wird und dass beim Trennen mittels des Abstreifers, (40) eine Kraft gegen die Metallwerkstücke (11, 12) ausgeübt wird, während eine in eingegengesetzter Richtung wirkende Kraft den Stempel zurückzieht.

12. Verfahren nach Anspruch 9, 10 oder 11, **dadurch gekennzeichnet, dass** das Gegenwerkzeug (30) als Matrize ausgebildet ist, die eine Ausnehmung bzw. Hohlraum bzw. Verformungsraum bzw. Kuhle (31) im Bereich der Bearbeitungsfläche aufweist, wobei der Stempel die auf der Bearbeitungsfläche angeordneten Metallwerkatücke (11, 12) in (einem Überschneidungsbereich bzw. Überlappungsbereich oberhalb) der Ausnehmung bzw. Hohlraum bzw. Verformungsraum bzw. Kuhle (31) derart verformt, dass sich durch radiales Fliessen der Werkstoffe in die Ausnehmung bzw. Hohlraum bzw. verformungsraum bzw. Kuhle (31) ein lokaler Hinterschnitt (f) herausbildet.

13. Verfahren nach Anspruch 9, 10 oder 11, **dadurch gekennzeichnet, dass** als Gegenwerkzeug (30) ein Amboss mit ebener bzw. planer bzw. horizontaler bzw. waagerechter bzw. flacher Bearbeitungsfläche bzw. Oberfläche zum Einsatz kommt, wobei der Stempel die auf der Bearbeitungsfläche angeordneten bzw. ausgerichteten Metallwerkstücke (11, 12) in einem Überschneidungsbereich bzw, Überlappungsbereich derart verformt, dass sich erst eine ambossseitige Erhebung und dann durch radiales Fliessen der Werkstoffe ein lokaler kleiner Hinterschnitt bzw. Hintersehneidung (f) herausbildet.

14. Verwendung eines Clinchwerkzeuges (20) nach einem der vorhergehenden Anspruche 1 - 8, **dadurch gekennzeichnet, dass** das Clinchwerkzeug (20) eingesetzt wird, um zwei Motallwerkstücke (11, 12) durch mindestens einen lokalen Hinterschnitt (13) miteinander fest zu verbinden, wobei die beiden Metallwerkstücke (11, 12) eine Gesamtdicke (tt) aufweisen, die grösser ist als 8mm.

15. Verwendung nach Anspruch 14, **dadurch gekennzeichnet, dass** das erste Metallwerkstück (11) dicker ist als das zweite Metallwerkstück (12).

16. Verwendung nach Anspruch 14 und/oder 15, **dadurch gekennzeichnet, dass** es sich entweder bei dem ersten Metallwerkstück (11) oder dem zweiten metallwerkstück (12) um ein Stahlprofil bzw. Blechprofil bzw. Stahlwinkel bzw. Flachstahl bzw. Flacheisen bzw. Formrohr bzw. Flachteil bzw. Blechstreifen bzw. um einen Stahlträger handelt.

## Claims

1. Clinching tool (20) for producing a load-bearing connection of a first metal workpiece (11) with a second metal workpiece (12), wherein the clinching tool (20) comprises a die tool and a counter-tool (30) which together form, by deformation of the two metal workpieces (11, 12), a clinch connection (13) connecting together the first metal workpiece (11) and the second metal workpiece (12), and wherein the die tool comprises a die (21, 22), which is constructed to be rotationally symmetrical with respect to a rotational axis (24) of the die and has a flank (25) arranged concentrically with respect to the rotational axis and a front end surface (23) lying perpendicularly to the rotational axis (24), wherein the flank (25) of the die is conically shaped at least in the lower transition region (21) to the front end surface (23) and has a flank angle (W, W1, W2) which is smaller than or equal to 10 degrees, preferably smaller than or equal to 5 degrees, **characterised in that** the flank angle (W, W1, W2) goes over from a first angle (W1) directly at the end of the lower transition region (21), which leads to the front end surface (23), to a second angle (W2) of an upper transition region (22), wherein the first angle (W1) is larger than the second angle (W2), and that during the deforming the die is sunk also in the upper transition region (22) at least in part into the metal workpieces (11, 12).

2. Clinching tool (20) according to claim 1, **characterised in that** the entire length (L) of the die sunk into the metal workpieces (11, 12) during the deforming is conically shaped.

3. Clinching tool (20) according to claim 1 or 2, **characterised in that** the first angle (W1) is smaller than or equal to 10 degrees and preferably smaller than or equal to 5 degrees and the second angle (W2) is smaller than or equal to 2 degrees and is preferably 0 to 1 degrees.

4. Clinching tool (20) according to any one of the preceding claims, **characterised in that** the die has a diameter (D2) between 10 and 30 millimetres or 35 millimetres, wherein the diameter (D2) preferably lies between 12 and 20 millimetres or 25 millimetres (inclusive).

5. Clinching tool (20) according to any one of the preceding claims, **characterised in that** the counter-tool (30) is constructed as an anvil having a flat, even, planar, horizontal or level working area or surface.

6. Clinching tool (20) according to any one of the preceding claims 1 to 5,
**characterised in that** the counter-tool (30) is constructed as a matrix having a recess, cavity, deformation space or depression (31).

7. Clinching tool (20) according to any one of the preceding claims, **characterised in that** it contains, has or comprises a holding-down device (41, 40) for fixing the metal workpieces (11, 12) and a stripper (40) for separating the die after deformation of the metal workpieces (11, 12).

8. Clinching tool (20) according to any one of the preceding claims, **characterised in that** it comprises two identical dies which are arranged adjacent to one another and are capable of connecting the first metal workpiece (11) with the second metal workpiece (12) by two clinch connections (13).

9. Method of using a deformation-based connecting technology for producing a load-bearing connection of a first metal workpiece (11) and a second metal workpiece (12), wherein a clinch connection (13) connecting the first metal workpiece (11) with the second metal workpiece (12) is formed by local deformation by means of a die tool (20) and a counter-tool (30), comprising the steps:
- superimposing and preparing or aligning the first metal workpiece (11) and the second metal workpiece (12) on a processing surface of the counter-tool (30),
- advancing a die of the die tool (20),
- sinking the die into the two assembled metal workpieces (11, 12) until the underside (14) of the second metal workpiece (12) bears against a region of the counter-tool (30) and
- withdrawing the die,
**characterised in that** the die has a flank (25) which is conically shaped at least in a lower transition region (21) to a front end surface (23) and has a flank angle (W, W1, W2) smaller than or equal to 10 degrees, preferably smaller than or equal to 5 degrees, wherein the first angle (W1) is greater than the second angle (W2) and during sinking of the die the upper transition region (21) also penetrates at least in part into the metal workpieces (11, 12).

10. Method according to claim 9, **characterised in that** a stripper (40) is used during withdrawal of the die to enable separation when jamming of the die or the die tool (20) of metal workpieces (11, 12) occurs.

11. Method according to claims 9 and 10, **characterised in that** the stripper (40) is advanced against a surface (15) of the first metal workpiece (11) prior to the separation and that during the separation a force is exerted against the metal workpieces (11, 12) by means of the stripper (40) whilst a force acting in opposite direction retracts the die.

12. Method according to claim 9, 10 or 11, **characterised in that** the counter-tool (30) is constructed as a matrix having a recess, cavity, deformation space or depression (31) in the region of the processing surface, wherein the die deforms the metal workpieces (11, 12), which are arranged on the processing surface, (in an intersection region or overlap region above) the recess, cavity, deformation space or depression (31) in such a manner than a local undercut (f) is formed by radial flow of the materials into the recess, cavity, deformation space or depression (31).

13. Method according to claim 9, 10 or 11, **characterised in that** an anvil with an even, planar, horizontal, level or flat processing area or surface is used as counter-tool (30), wherein the die deforms the metal workpieces (11, 12), which are arranged or aligned on the processing surface, in an intersection region or overlap region in such a manner that firstly an elevation is formed at the anvil side and then, through radial flow of the materials, a local small undercut or undercutting (f).

14. Use of a clinching tool (20) according to any one of the preceding claims 1 to 8,
**characterised in that** the clinching tool (20) is used to firmly connect together two metal workpieces (11, 12) by at least one local undercut (13), wherein the two metal workpieces (11, 12) have a total thickness (tt) greater than 8 millimetres.

15. Use according to claim 14, **characterised in that** the first metal workpiece (11) is thicker than the second metal workpiece (12).

16. Use according to claim 14 and/or 15, **characterised in that** either the first metal workpiece (11) or the second metal workpiece (12) is a steel profile member, plate profile member, steel angle member, steel sheet, sheet iron, shaped tube, plate member, plate strip or steel girder.

## Revendications

1. Outil de clinchage (20) pour réaliser une liaison solide entre une première pièce en métal (11) et une seconde pièce en métal (12), étant précisé que l'outil de clinchage (20) comprend un outil à poinçon et un outil opposé (30) qui forment ensemble, par déformation des deux pièces en métal (11, 12), une liaison par clinchage (13) qui relie la première pièce en métal (11) à la seconde pièce en métal (12), et que l'outil à poinçon comporte un poinçon (21, 22) qui présente une symétrie de révolution par rapport à son axe de rotation (24) et qui présente un flanc (25) concentrique par rapport à l'axe de rotation et une surface d'extrémité frontale (23) perpendiculaire à l'axe de rotation (24), le flanc (25) du poinçon ayant une forme conique au moins dans la zone de transition inférieure (21) avec la surface d'extrémité frontale (23) et présentant un angle de flanc (W, W1, W2) qui est inférieur ou égal à 10 degrés, de préférence inférieur ou égal à 5 degrés, **caractérisé en ce que** l'angle de flanc (W, W1, W2) passe d'un premier angle (W1), directement à l'extrémité de la zone de transition inférieure (21) qui mène à la surface d'extrémité frontale (23), à un second angle (W2) d'une zone de transition supérieure (22), le premier angle (W1) étant supérieur au second angle (W2), et **en ce que** lors de la déformation, le poinçon est enfoncé au moins en partie dans les pièces en métal (11, 12) même dans la zone de transition (22).

2. Outil de clinchage (20) selon la revendication 1,
**caractérisé en ce que** toute la longueur (L) du poinçon qui est enfoncée dans les pièces en métal (11, 12) lors de la déformation a une forme conique.

3. Outil de clinchage (20) selon les revendications 1 et 2, **caractérisé en ce que** le premier angle (W1) est inférieur ou égal à 10 degrés et de préférence inférieur ou égal à 5 degrés, et le second angle (W2) est inférieur ou égal à 2 degrés, et est de préférence de 0 à 1 degré.

4. Outil de clinchage (20) selon l'une des revendications précédentes, **caractérisé en ce que** le poinçon a un diamètre (D2) qui est situé entre 10 et 30 ou 35 mm, le diamètre (D2) étant situé de préférence entre 12 et 20 mm ou 25 mm (inclus).

5. Outil de clinchage (20) selon l'une des revendications précédentes, **caractérisé en ce que** l'outil opposé (30) est conçu comme une enclume qui présente une face ou surface de traitement plate ou plane ou horizontale.

6. Outil de clinchage (20) selon l'une des revendications 1 à 5, **caractérisé en ce que** l'outil opposé (30) est conçu comme une matrice qui présente un évidement ou une cavité ou un espace de déformation ou un creux (31).

7. Outil de clinchage (20) selon l'une des revendications précédentes, **caractérisé en ce qu'**il contient ou comporte ou comprend un abaisseur (41, 40) pour fixer les pièces en métal (11, 12), et un dévêtisseur (40) pour séparer le poinçon après la déformation des pièces en métal (11, 12).

8. Outil de clinchage (20) selon l'une des revendications précédentes, **caractérisé en ce qu'**il comporte deux poinçons de même type qui sont disposés côte à côte et qui sont aptes à relier la première pièce en métal (11) à la seconde pièce en métal (12) par deux liaisons par clinchage (13).

9. Procédé pour appliquer une technologie de liaison par déformation pour réaliser une liaison solide entre une première pièce en métal (11) et une seconde pièce en métal (12), selon lequel on forme à l'aide d'un outil à poinçon (20) et d'un outil opposé (30), par déformation locale, une liaison par clinchage (13) qui relie la première pièce en métal (11) à la seconde pièce en métal (12), avec les étapes qui consistent :
- à superposer et préparer ou orienter la première pièce en métal (11) et la seconde pièce en métal (12) sur une surface de traitement de l'outil opposé (30),
- à avancer un poinçon de l'outil à poinçon (20),
- à enfoncer le poinçon dans les deux pièces en métal (11, 12) posées l'une sur l'autre, jusqu'à ce que la face inférieure (14) de la seconde pièce en métal (12) soit appliquée contre une zone de l'outil opposé (30),
- à retirer le poinçon,
**caractérisé en ce que** le poinçon présente un flanc (25) qui a une forme conique au moins dans une zone de transition inférieure (21) avec une surface d'extrémité frontale (23), et un angle de flanc (W, W1, W2) qui est inférieur ou égal à 10 degrés, de préférence inférieur ou égal à 5 degrés, l'angle de flanc (W, W1, W2) passant d'un premier angle (W1), directement à l'extrémité de la zone de transition inférieure (21) qui se prolonge par la surface frontale (23), à un second angle (W2) d'une zone de transition supérieure (22), et le premier angle (W1) étant supérieur au second angle (W2), et **en ce que** lors de l'enfoncement du poinçon, la zone de transition supérieure (22) pénètre elle aussi, au moins en partie, dans les pièces en métal (11, 12).

10. Procédé selon la revendication 9, **caractérisé en ce qu'**un dévêtisseur (40) est utilisé lors de l'extraction du poinçon, pour permettre une séparation en cas de coincement du poinçon ou de l'outil à poinçon (20) sur les pièces en métal (11, 12).

11. Procédé selon les revendications 9 et 10,
**caractérisé en ce que** le dévêtisseur (40), avant la séparation, est avancé vers une surface (15) de la première pièce en métal (11) et **en ce que** lors de la séparation une force est exercée contre les pièces en métal (11, 12) à l'aide du dévêtisseur (40) tandis qu'une force agissant dans le sens opposé rétracte le poinçon.

12. Procédé selon les revendications 9, 10 ou 11,
**caractérisé en ce que** l'outil opposé (30) est conçu comme une matrice qui présente un évidement ou une cavité ou un espace de déformation ou un creux (31) dans la zone de la surface de traitement, les pièces en métal (11, 12) disposées sur la surface de traitement étant déformées par le poinçon dans une zone de chevauchement ou de recouvrement, au-dessus de l'évidement ou de la cavité ou de l'espace de déformation ou du creux (31), de telle sorte qu'il se forme une contre-dépouille locale (f) par fluage radial des matériaux dans l'évidement ou la cavité ou l'espace de déformation ou le creux (31).

13. Procédé selon les revendications 9, 10 ou 11,
**caractérisé en ce qu'**on utilise comme outil opposé (30) une enclume avec une surface de traitement ou une surface plate ou plane ou horizontale, les pièces en métal (11, 12) disposées ou orientées sur la surface de traitement étant déformées par le poinçon dans une zone de chevauchement ou de recouvrement de telle sorte qu'il se forme d'abord une bosse côté enclume, puis une petite contre-dépouille locale (f) par fluage radial des matériaux.

14. Utilisation d'un outil de clinchage (20) selon l'une des revendications 1 à 8 précédentes, **caractérisée en ce qu'**on utilise l'outil de clinchage (20) pour relier solidement deux pièces en métal (11, 12) à l'aide d'au moins une contre-dépouille locale (13), les deux pièces en métal (11, 12) présentant une épaisseur totale (tt) qui est supérieure à 8 mm.

15. Utilisation selon la revendication 14,
**caractérisée en ce que** la première pièce en métal (11) est plus épaisse que la seconde pièce en métal (12).

16. Utilisation selon les revendications 14 et/ou 15,
**caractérisée en ce que** soit la première pièce en métal (11), soit la seconde pièce en métal (12) est constituée par un profilé en acier ou un profilé en tôle ou une équerre en acier ou un acier plat ou un plat ou un tube profilé ou une pièce en tôle ou une bande en tôle ou une poutre en acier.
